# EUROPÄISCHE PATENTSCHRIFT

(11) **EP 1 094 996 B1**
(45) Veröffentlichungstag und Bekanntmachung des Hinweises auf die Patenterteilung: **04.12.2002**
(21) Anmeldenummer: 99938219.5
(22) Anmeldetag: 09.07.1999
(51) Int. Cl.: C04B 38/00

(54) **PORÖSE KERAMIKEN**
POROUS CERAMIC
CERAMIQUES POREUSES

(30) Priorität: 09.07.1998 DE 19830795
(43) Veröffentlichungstag der Anmeldung: 02.05.2001
(73) Patentinhaber: Nerlich, Michael, 93042 Regensburg (DE)
(72) Erfinder: HECKMANN, Klaus, D-93186 Pettendorf (DE); WENGER, Thomas, D-93049 Regensburg (DE)
(74) Vertreter: Albrecht, Thomas, Dr.
(86) Internationale Anmeldenummer: EP9904841
(87) Internationale Veröffentlichungsnummer: WO00002830

(56) Entgegenhaltungen:
- EP-A- 0 479 553
- GB-A- 1 037 502
- US-A- 3 565 259
- PURZ H J: "MORPHOLOGICAL INVESTIGATIONS OF ORDERED GEL FORMATION IN POLYELECTROLYTES" J POLYM SCI, PART C, POLYM SYMP 1972, Nr. 38, 1972, Seiten 405-417, XP002122083
- LAYROLLE P ET AL: "SOL-GEL SYNTHESIS OF AMORPHOUS CALCIUM PHOSPHATE AND SINTERING INTOMICROPOROUS HYDROXYAPATITIE BIOCERAMICS" JOURNAL OF THE AMERICAN CERAMIC SOCIETY,US,AMERICAN CERAMIC SOCIETY. COLUMBUS, Bd. 81, Nr. 6, Seite 1421-1428 XP000765588 ISSN: 0002-7820

## Beschreibung

Die Erfindung betrifft eine poröse Keramik sowie ein Verfahren zu ihrer Herstellung.

Hochporöse Keramiken finden zunehmend Anwendung als Filtersysteme, als Implantate in der Medizintechnik und als Träger für Katalysatoren. Zu ihrer Herstellung gibt es mehrere Verfahren, von denen hier nur zwei genannt seien:

Die Herstellung aus Aerogelen und das Ausbrennen zuvor beigemengter organischer Additive.

Die Einsatzbereiche solcher Keramiken richten sich nach ihrer chemischen und thermischen Beständigkeit, der Durchströmbarkeit, nach der spezifischen Oberfläche und nach der Länge der Diffusionswege bis zur aktiven Oberfläche.

Aus Forderungen an das Einsatzgebiet und an die Beständigkeit ergibt sich die Auswahl der Materialien, aus Forderungen an Durchströmbarkeit, an Diffusionswege und Oberflächen folgen die Wahl von Porengrößen, Porengrößenverteilungen und Porenformen. Die Bedeutung dieser Eigenschaften für den Einsatz der Keramik-Körper ist klar: gute Beständigkeit gestattet den Einsatz auch aggressiver Medien und hoher Temperaturen, gute Durchströmbarkeit hat kleine Druckverluste im Betrieb zur Folge und ermöglicht somit einen geringen Energieverbrauch, hohe spezifische Oberflächen bieten eine hohe Dichte von Adsorptions- und/oder Reaktionszentren, kurze Diffusionswege ermöglichen deren Erreichbarkeit durch die Stoffströme in passablen Zeiten.

Leider ist es bisher nur unvollständig gelungen, diese vier wesentlichen Eigenschaften simultan zu optimieren, um hohe Beständigkeiten, niedrige Strömungswiderstände, hohe spezifische Oberflächen und kurze Diffusionswege zu erzielen. Gute Durchströmbarkeit läßt sich nicht mit nachträglich gesinterten, ungeordneten Haufwerken oder Schüttungen von Partikeln erzielen, denn diese sind makroskopisch isotrop und besitzen darum hohe Strömungswiderstände. (Ein bekanntes Beispiel für ein gesintertes Haufwerk ist eine Glasfritte, wie man sie in chemische Geräte einschmilzt.) Man benötigt vielmehr makroskopisch anisotrope Partikelanordnungen, in der Praxis also beidseitig offene Röhren- oder Kapillarensysteme mit gleich großen Öffnungsdurchmessern. Solche Systeme kann man aber bisher nur mit - absolut gesehen - großen Röhren-/Kapillarenabständen herstellen. Die Regionen zwischen den Kapillaren/Röhren sind nur über lange Diffusionswege zu erreichen. Hierbei können sich hohe spezifische innere Oberflächen des Wandmaterials nicht auswirken, da nur dessen Randbereiche um die Röhren/Kapillaren herum in tragbar kurzer Zeit von den Stoffströmen erreicht werden.

Von Kapillaren bzw. Röhren durchzogene Keramiken werden derzeit nur nach Strangguß-Verfahren hergestellt. Die kleinsten hierbei erreichbaren Durchmesser liegen bei 200 µm. Die Abstände zwischen den Kapillaren/Röhren betragen ca. 600 µm.

Chemisch und thermisch beständige Keramik-Körper mit - absolut gesehen - so kleinen Röhren-/Kapillarenabständen, daß das gesamte Wandmaterial per Diffusion für die Stoffströme praktisch gleichzeitig zugänglich wäre, werden unseres Wissens derzeit nicht auf dem Markt angeboten. Auch in der Patent- und in der wissenschaftlichen Literatur finden sich keine Hinweise auf solche Strukturen.

Lediglich die Druckschrift EP-A-0479553 beschreibt poröse Keramiken mit hoher Porosität und enger Porengrößenverteilung, die erhalten werden durch Herstellen einer verdünnten Aufschlämmung aus einem keramischen Ausgangsmaterial in einer Lösung einer hochmolekularen organischen Verbindung wie Ammoniumalginat, die durch Umsetzen mit einer Säure oder drei- oder mehrwertigen Kationen oder durch Erhitzen oder Abkühlen gelifiziert werden kann. Die Aufschlämmung wird mit einer Flüssigkeit oder einem Gel, in dem die Säure oder drei- oder mehrwertige Kationen vorliegen, kontaktiert oder erhitzt oder abgekühlt, um einen keramischen Gelkörper zu erhalten, der anschließend gebrannt wird. Diese porösen Keramiken besitzen verbesserte Widerstandsfähigkeit und mechanische Festigkeit und eignen sich somit als Hochtemperatur-Katalysatorträger.

Der Erfindung liegt daher die Aufgabe zugrunde, einen keramischen Körper mit hoher Beständigkeit, niedrigem Ströraungswiderstand, hoher spezifischer Oberfläche und kurzen Diffusionswegen bereitzustellen - sowie ein Verfahren zu seiner Herstellung.

Gegenstand der Erfindung ist eine poröse Keramik, hergestellt durch:
a) Vermischen einer wässerigen Lösung eines geeigneten ionotrop-orientierbaren Polyanions mit entweder
   - den solförmig vorliegenden Oxiden oder Hydroxiden oder Oxidhydraten der Metalle Al, Zr, Ti und Nb,
   - oder mit den in Suspension vorliegenden feinkristallinen Oxiden oder Hydroxiden oder Oxidhydraten dieser Metalle,
   - oder mit in Suspension vorliegendem feinkristallinem Tricalciumphosphat oder Apatit,
b) Kontaktieren des gemäß a) erhaltenen Mischsoles bzw. der gemäß a) erhaltenen Suspension mit der Lösung eines Salzes eines zwei- oder dreiwertigen Metallkations zur Herstellung eines ionotropen Gelkörpers,
c) Kompaktieren des Gelkörpers durch Einbringen in Elektrolytlösungen, welche die Synärese des ursprünglichen gelbildenden Polyelektrolyten weiter verstärken,
d) Spülen des Gelkörpers mit Wasser und anschließendes Tränken mit einem leicht flüchtigen und wassermischbaren Lösemittel,
e) Befreien des gemäß d) erhaltenen wasserfreien Gelkörpers von dem leicht flüchtigen wassermischbaren Lösemittel,
f) Herausbrennen der organischen Bestandteile aus dem gemäß e) erhaltenen trockenen Gelkörper,
g) Sintern des gemäß f) erhaltenen Produktes.

Zonotrope Gele entstehen, wenn man die verdünnte wäßrige Lösung eines geeigneten anionischen Polymers, beispielsweise eines Natrium-Alginates oder eines Natrium-Pektinates, -Cellulosexanthogenates, -Xanthates, -Hyaluronates mit der Lösung eines zweiwertigen Kations wie Cu²⁺ oder Ca²⁺ oder eines dreiwertigen Kations wie Al³⁺ oder La³⁺ kontaktiert. Dies geschieht z.B. durch Eintropfen der Lösung des Polyanions in die Lösung des Metallkations oder durch Eintropfen der Lösung des Metallkations in die Lösung des Polyanions oder durch konvektionsfreies Überschichten der einen Lösung mit der anderen. Die Massenanteile der Polyanionen im Sol können sich zwischen 0,25 und 5,0 Gewichtsprozenten bewegen. Besonders geeignet sind Massenanteile von 0,5 bis 2,0 Gewichtsprozenten. Die Konzentrationen der Metallsalzlösungen liegen oberhalb von 10⁻³ M und unterhalb der jeweiligen Sättigungskonzentration des Salzes in Wasser. Am besten geeignet sind Konzentrationen zwischen 10⁻¹ und 2 M. Nach Ausbildung einer hautförmigen Ausfällung in der Phasengrenze zwischen den beiden Flüssigkeiten, der sogenannten Primärhaut, setzt eine gerichtete Diffusion des niedermolekularen Elektrolyten in die Lösung des Polymers ein. Die dort weiterhin auftretende Fällung führt jedoch nicht zu einem amorphen Niederschlag, sondern zu einem räumlich strukturierten Gel.

Es entstehen regelmäßig angeordnete und praktisch gleich große Kapillaren mit kreisförmigem Querschnitt, deren Wände aus dem Fällungsprodukt bestehen und deren Lumina das bei der Fällung freigesetzte Wasser aufnehmen. Die Stabilität des Gels rührt daher, daß die zwei- oder dreiwertigen Kationen die Moleküle des Polymers miteinander vernetzen und somit die Kapillarenwände eine gewisse mechanische Festigkeit erhalten. Die Kapillaren verlaufen alle parallel zueinander in Diffusionsrichtung des Elektrolyten und können eine Länge von einigen Zentimetern erreichen. Ihre Anordnung ist fast perfekt hexagonal und ihre Radien nehmen in Diffusionsrichtung des Metallkations langsam zu mit einer Neigung von ca. 5%. Die Durchmesser der Kapillaren des Geles lassen sich über die Viskosität des Polyanions und die Art des mehrwertigen Kations in weiten Grenzen einstellen. Die bisher erreichte untere Grenze liegt bei ca. 5 µm, die obere bei ca. 300 µm. Werden die Gele durch Überschichten der beiden Lösungen erzeugt, so reicht ihre Festigkeit in den meisten Fällen aus, sie - von oben beginnend - in Scheiben zu schneiden, deren kleinste Dicke ca. 1/2 mm ist und deren maximale Dicke ca. 2 cm betragen kann. Wegen der Konizität der Kapillaren, die von den Schnitten senkrecht getroffen werden, erhält man je nach Schnitthöhe im Gel Kapillaren mit beliebig vorgebbaren Durchmessern.

Das hier als Beispiel genannte Alginat ist im Hinblick auf eine ionotrope Orientierbarkeit besonders gründlich untersucht worden. Auch sind die Kapillarengele des Alginates besonders regelmäßig. Andere, weniger ausführlich erforschte Substanzen bilden aber unter vergleichbaren Versuchsbedingungen gleichfalls Kapillarenmuster aus, die sich von denen des Alginates nur qualitativ unterscheiden.

Zu diesen Substanzen zählen u.a. organische Polyionen wie Pektinate, Cellulosexanthogenate, Xanthate, Hyaluronate, Chondroitinsulfate, Salze der Carboxymethylcellulose, der Carboxylcellulose und des Chitosans; weiter gehören dazu Symplexe aus Polyanionen und Polykationen, schließlich aber auch anorganische Stoffe wie Vanadinpentoxid und gemischt organisch/anorganische wie Quecksilber-Sulfosalizylsäure. Diese Substanzen sind also allesamt Polyelektrolyte.

Erfindungsgemäß gelingt es, solche ionotropen Kapillaren-Gele als Leitstrukturen für die Herstellung von rißfreien porösen Keramiken zu verwenden, deren geometrische Struktur der entsprechenden Struktur der Gele vollständig gleicht. Nur sind die absoluten Abmessungen der porösen keramischen Strukturen allesamt etwas kleiner als im Gel - als Folge von Trocknen und Sintern. Das äußere Aussehen einer solchen Keramik gleicht auf den ersten Blick dem eines engporigen Sinterkörpers aus Glas. Im Unterschied dazu ist die Keramik aber nicht isotrop, sondern in Folge der Kapillaren hochgradig anisotrop. Man erkennt das auf den zweiten Blick am irisierenden Schimmer der Keramikoberfläche, der an das Aussehen von Facettenaugen erinnert.

Die Durchmesser der Kapillaren der Keramik haben Werte zwischen 1 und 200 µm, die Abstände zwischen den Kapillaren sind etwa so groß wie die Kapillaren-Durchmesser. Die von Kapillaren-Öffnungen gebildete freie Oberfläche der Keramik beträgt ca. 50 % ihrer Gesamtoberfläche; und man findet etwa 50.000 Kapillaren pro cm² Oberfläche. Die Porosität bzw. der Hohlraumanteil der Keramik liegt zwischen 75% und 85% ihres Gesamtvolumens.

Mit Hilfe der Quecksilberporometrie läßt sich die Porosität der Keramik näher analysieren. Man findet, daß z.B. eine aus Alginat-/Böhmit-Mischsolen hergestellte Keramik eine trimodale Porengrößenverteilung besitzt, eine aus suspendiertem Aluminiumoxid gewonnene Keramik dagegen eine bimodale Verteilung. In beiden Fällen stellen die Kapillaren die Population der größten Poren und die Zwischenräume zwischen den Aluminiumoxid-Partikeln der Porenwände die Population der zweitgrößten Poren. Bei der Verwendung von Böhmit kommen als dritte Population die Räume zwischen den einzelnen Kriställchen des Böhmit noch hinzu, die sich als eine weitere innere Porosität der Aluminiumoxid-Partikel in den Kapillarenwänden äußert. Die erste Population (Kapillaren) hat ihr Porengrößenmaximum bei ca. 10 µm, die zweite bei ca. 130 nm, die dritte bei 58 nm.

Die Herstellung der Keramik erfordert es, daß im Alginatsol entweder ein Sol von Metallhydroxid oder von Metalloxidhydrat erzeugt oder dem Alginatsol eine Aufschwemmung eines feinkristallinen Metalloxids oder Metallhydroxids oder Metalloxidhydrates beigemengt wird.

Der Begriff "feinkristallin" bezeichnet mittlere Partikelgrößen von 10 nm bis 1 mm, vorzugsweise von 100 nm bis 500 nm.

Die Bildung der ionotropen Kapillaren-Gele aus Mischsolen verläuft genauso wie bei den unmodifizierten Solen mit dem Unterschied, daß die anorganische Komponente sich in den Kapillarenwänden ansammelt. In diesen Gelkörpern ist die Dichte der Feststoff-Partikel in den Kapillarenwänden noch so gering, daß eine daraus hergestellte Keramik nach Durchlaufen aller weiteren Prozeßschritte noch nicht die gewünschte mechanische Festigkeit besäße. Es ist darum notwendig, die Gelkörper einem Schrumpfungsprozeß zu unterziehen, um die Partikeldichten weiter zu erhöhen. Hierzu muß man die Synärese, die mit der ursprünglichen Gelbildung einhergegangen war, noch verstärken; es müssen weitere Anteile des im Gel gebundenen Wassers in die Kapillarlumina hinein ausgeschieden werden. Um dies zu erreichen, gibt es verschiedene praktische Möglichkeiten, die aber theoretisch alle auf demselben Prinzip beruhen: Der osmotische Druck in den Bereichen der Kapillarenwände muß gesenkt, der osmotische Druck in den Lumina muß erhöht werden. Die Druckerhöhung in den Lumina bedarf keiner weiteren Erörterung, die Druckerniedrigung in den Bereichen der Kapillarenwände erfolgt über einen Ionenaustausch: Die zur Gelbildung ursprünglich benötigten mehrwertigen Metallkationen werden durch stärker gebundene, am besten auch noch schwächer hydratisierte Ionen, ersetzt. Dies können u.a. Protonen sein, wobei man dann den Gelkörper zur weiteren Kompaktierung in beispielsweise salzsauren Bädern aufsteigender Konzentrationen inkubieren muß. Besonders wirksam ist es, zum Austauschen der Metallionen die Lösung eines Poly- oder Oligoelektrolyten in die Kapillarenlumina einzubringen, dessen Festionen entgegengesetzt geladen sind wie die Festionen des ursprünglichen gelbildenden Polyions. Entgegengesetzt geladene hochmolekulare Elektrolyte fällen sich nämlich gegenseitig zu Niederschlägen von hoher Dichte aus, die in den meisten Lösemitteln unlöslich sind. Man nennt sie "symplexe". Ist das ursprüngliche gelbildende Polyion ein Polyanion, z.B. ein Alginat, dann eignen sich zur Symplexbildung alle Polykationen - z.B. Polyvinylamin, Polyallylamin, Polyvinylpyridin, Polyethylenimin oder auch Polykationen biologischer Herkunft wie Chitosan; geeignete Oligokationen wären z.B. das Pentaethylenhexamin oder wiederum biologische Stoffe, wie die Protamine und Histone. Zu den geladenen Oligomeren und Polymeren, die sich zur Symplexbildung eignen, zählen auch die Mizellen von ionischen Netzmitteln.

Auch bei der Symplexbildung ist es zweckmäßig, die Konzentrationen des fällenden Polyions portionsweise zu steigern.

Während des Ionenaustauschs schrumpfen die Gelkörper in jeder Dimension auf ca. die Hälfte ihrer ursprünglichen linearen Abmessungen, und der lonenaustausch muß besonders sorgfältig erfolgen, da die Gelkörper während des Schrumpfens eine ausgeprägte Tendenz zur Rißbildung zeigen.

Die Gelkörper durchlaufen nach dem Ionenaustausch eine Reihe von Spül- und Entwässerungsschritten, wobei das Wasser durch ein leicht flüchtiges organisches und wassermischbares Lösemittel, z.B. Aceton, verdrängt wird. Nach dem Entwässern entfernt man auch das Lösemittel. Hierzu eignet sich z.B. überkritisches Trocknen in Kohlendioxid oder das Abpressen der Flüssigkeit mit Hilfe feinporöser Tonplatten oder auch einfaches Stehenlassen an der Luft bei Raumbedingungen. Nach Entfernen des Lösemittels hat man einen typischen "Grunkörper" in Händen. Er wird entsprechend einem geeigneten Temperatur-Zeit-Programm erhitzt, wobei die organische Leitstruktur verkohlt bzw. verbrennt. Die endgültige Keramik entsteht schließlich durch Sintern. Das Ausbrennen der organischen Leitsubstanzen geschieht routinemäßig bei 600°C für zwei Stunden. Das Ende des Ausbrennens wird in jedem Falle dadurch angezeigt, daß die Farbe der Probe sich von Schwarz nach Weiß ändert. Zum Sintern der Proben werden Temperaturen von 800°C und 1400°C benötigt. Die Brenndauern liegen zwischen zehn und zwei Stunden. Temperatur und Dauer des Brennvorgangs entscheiden letztlich über die Größe der spezifischen Oberfläche der Keramik und über ihre mechanische Fertigkeit. Je nach den Anforderungen an das Endprodukt sind sie von Fall zu Fall neu zu ermitteln.

Die erfindungsgemäße Keramik kann in verschiedenen geometrischen Formen hergestellt werden, die sich nach dem Einsatzbereich richten. Die Keramiken sind besonders vielfältig zu verwenden, wenn sie die Gestalt von Fritten mit definierter Geometrie haben, die man leicht in vorgegebene Apparaturen oder Apparateteile einbauen kann. Solche Fritten sind scheibenförmig und lassen sich sowohl rund als auch eckig herstellen. Ihre Dicken betragen 2 bis 4 mm. Die Kantenlängen eckiger Scheiben sind - ebenso wie die Durchmesser runder Scheiben - ca. 100 mm.

Eine andere Form der Keramik besteht aus einem Granulat von vorwiegend kugelig geformten Körnern mit wenigen Millimetern Durchmesser. Man erhält es, wenn man eine der beiden beteiligten Lösungen in die andere eintropft und mit den dabei entstehenden Gelkügelchen entsprechend weiter verfährt.

Manchmal genügt es auch, die Keramik nur mechanisch zu zerkleinern und dann verschiedene Siebfraktionen daraus zu gewinnen. Hierbei ist es wichtig, daß die Partikelabmessungen deutlich größer bleiben als die Porendurchmesser, denn jedes Partikel sollte mehrere Kapillaren enthalten.

Die Einsatzbereiche der Kapillaren-Keramik sind vielfältig. In erster Linie ist an die Verwendung von Fritten oder von Granulat als Katalysator bzw. Katalysatorträger zu denken. Dies gilt besonders für die Keramiken aus den Oxiden von Zr, Ti, Nb bzw. von Al.

Sodann kann die Keramik in Frittenform als durchströmbares Sorbens für chromatografische Zwecke dienen. Hier bietet sich eine Keramik aus Aluminiumoxid an.

Besteht die Keramik aus Apatit oder Tricalciumphosphat, so kann man sie im chirurgischen Bereich als poröse Leitstruktur für die Neubildung von Knochen einsetzen.

Zerkleinert man die Keramik mit einer geeigneten Mühle so, daß die resultierenden Partikel nicht kleiner werden als ca. 100 µm und somit noch eine Anzahl von intakten Kapillaren enthalten, so hat man ein anorganisches Material in Händen, das sich zusammen mit organischen Polymeren, beispielsweise Acrylharzen, zu Verbundwerkstoffen mit interessanten neuen Eigenschaften wie z.B. Zahnfüllungen verarbeiten läßt. Wird die poröse Kapillaren-Keramik (evtl. nach Belegen ihrer Oberflächen mit einem Haftvermittler) mit den Monomeren oder den Oligomeren einer polymerisationsfähigen Substanz getränkt, so ist der bei der Polymerisation unvermeidbare Schrumpf im Inneren der Kapillaren besonders gering. Zahnfüllungen aus einem Verbundwerkstoff, der hohe Anteile an Kapillaren-Keramik enthält, neigen folglich beim Aushärten nur wenig zu schrumpfbedingter Rißbildung zwischen Zahnbein und Füllung.

Die Erfindung wird durch die nachstehenden Beispiele näher erläutert.

### Beispiel 1

Keramische Kapillaren-Fritte, hergestellt aus einem Mischsol, bestehend aus Böhmit und Natriumalginat.

In einem ersten Schritt wird ein Böhmit-Sol hergestellt. Der Gewichtsanteil dieses Soles an Böhmit beträgt anfänglich ca. 3 %. In einem zweiten Schritt wird das Böhmitsol aufkonzentriert bis zu einem Böhmit-Anteil von 16,5%. In einem dritten Schritt wird ein Gewichtsanteil des aufkonzentrierten Böhmit-Soles mit vier Gewichtsanteilen einer 6 x 10⁻² M Natriumsulfat-Lösung vermischt. Nach dem Homogenisieren wird ein Gewichtsanteil dieser sulfathaltigen Suspension in einen Gewichtsanteil eines Natriumalginat-Soles eingebracht und darin wiederum homogenisiert, wobei das Natriumalginat-Sol 2 Gew.-% an Natriumalginat enthält. Man hat an dieser Stelle ein ziemlich stabiles Böhmit/Alginat-Mischsol in Händen.

Die folgenden Schritte umfassen: Konvektionsfreies Überschichten des Mischsoles mit 1 M Cu(NO₃)₂, Reifenlassen des Gels für 10 Stunden (d.h. Ausbildung der Kapillaren-Struktur), Schneiden der Gelscheiben, Durchführung des lonenaustausches (Cu²⁺ gegen 2H⁺) durch sukzessives Einbringen des Gelkörpers in Bäder von aufsteigender Salzsäurekonzentration, Auswaschen restlicher Säure mit Wasser und Ersatz des Wassers durch Aceton, Absaugen des Acetons mit porösen Tonplatten, Ausbrennen der organischen Bestandteile des Grünkörpers bei 600°C für 2 Stunden, Sintern zur Kapillaren-Fritte bei 1400°C für 2 Stunden. Der keramische Körper wird auf Endmaß geschliffen und ggf. geläppt.

### Beispiel 2

Keramische Kapillaren-Fritte, hergestellt aus einer Aluminiumoxid-Suspension in einem Natriumalginat-Sol.

Ein feinkristallines Aluminiumoxid-Pulver einer mittleren Partikelgröße von 350 nm wird in Wasser suspendiert. Der Gewichtsanteil an Aluminiumoxid in dieser Suspension beträgt 8%.

Sodann wird ein Gewichtsanteil dieser Suspension mit einem Gewichtsanteil eines Natriumalginat-Soles (2-gewichtsprozentig) vermischt. Nach dem Homogenisieren erfolgt die weitere Verarbeitung entsprechend Beispiel 1, beginnend mit der Überschichtung durch eine Kupfernitrat-Lösung.

## Patentansprüche

1. Poröse Keramik, erhältlich durch:
a) Vermischen einer wässerigen Lösung eines geeigneten ionotrop-orientierbaren Polyanions mit entweder
- den solförmig vorliegenden Oxiden oder Hydroxiden oder Oxidhydraten der Metalle Al, Zr, Ti und Nb,
- oder mit den in Suspension vorliegenden feinkristallinen Oxiden oder Hydroxiden oder Oxidhydraten dieser Metalle,
- oder mit in Suspension vorliegendem feinkristallinem Tricalciumphosphat oder Apatit,
b) Kontaktieren des gemäß a) erhaltenen Mischsoles bzw. der gemäß a) erhaltenen Suspension mit der Lösung eines Salzes eines zwei- oder dreiwertigen Metallkations zur Herstellung eines ionotropen Gelkörpers,
c) Kompaktieren des Gelkörpers durch Einbringen in Elektrolytlösungen, welche die Synärese des ursprünglichen gelbildenden Polyelektrolyten weiter verstärken,
d) Spülen des Gelkörpers mit Wasser und anschließendes Tränken mit einem leicht flüchtigen und wassermischbaren Lösemittel,
e) Befreien des gemäß d) erhaltenen wasserfreien Gelkörpers oder der Gelkörper von dem leicht flüchtigen wassermischbaren Lösemittel,
f) Heransbrennen der organischen Bestandteile aus dem gemäß e) erhaltenen trockenen Gelkörper oder den trockenen Gelkörpern,
g) Sintern des gemäß f) erhaltenen Produktes.

2. Poröse Keramik nach Anspruch 1, **dadurch gekennzeichnet, daß** sie als Kapillaren-Fritte ausgestaltet und erhältlich ist durch:
a) Vermischen der wässerigen Lösung eines geeigneten ionotrop-orientierbaren Polyanions mit entweder
- den solförmig vorliegenden Oxiden oder Hydroxiden oder Oxidhydraten der Metalle Al, Zr, Ti und Mb,
- oder mit den in Suspension vorliegenden feinkristallinen Oxiden oder Hydroxiden oder Oxiahydraten dieser Metalle,
- oder mit in Suspension vorliegendem feinkristallinem Tricalciumphosphat oder Apatit,
b) Überschichten des gemäß a) erhaltenen Mischsoles bzw. der gemäß a) erhaltenen Suspension mit der Lösung eines Salzes eines zwei- oder dreiwertigen Metallkations zur Herstellung eines ionotropen Gelkörpers und Schneiden dieses Gelkörpers in Scheiben,
c) Kompaktieren des Gelkörpers durch Einbringen in Elektrolytlösungen, welche die Synärese des ursprünglichen gelbildenden Polyelektrolyten weiter verstärken,
d) Spülen des Gelkörpers mit Wasser und anschließendes Tränken mit einem leicht flüchtigen und waasenniechbaren Lösemittel,
e) Befreien der gemäß d) erhaltenen wasserfreien Gelscheiben von dem leicht flüchtigen wassermischbaren Lösemittel,
f) Herausbrennen der organischen Bestandteile aus den gemäß e) erhaltenen trockenen Gelscheiben,
g) Sintern des gemäß f) erhaltenen Produktes.

3. Verfahren zur Herstellung einer porösen Keramik, **gekennzeichnet durch** die folgenden Stufen:
a) Vermischen einer wässerigen Lösung eines geeigneten ionotrop-orientierbaren Polyanions mit entweder
- den solförmig vorliegenden Oxiden oder Hydroxiden oder Oxidhydraten der Metalle Al, Zr, Ti und Nb,
- oder mit den in Suspension vorliegenden feinkristallinen Oxiden oder Hydroxiden oder Oxidhydraten dieser Metalle,
- oder mit in Suspension vorliegendem feinkristallinem Tricalciumphosphat oder Apatit,
b) Kontaktieren des gemäß a) erhaltenen Mischsoles bzw. der gemäß a) erhaltenen Suspension mit der Lösung eines Salzes eines zwei- oder dreiwertigen Metallkations zur Herstellung eines ionotropen Gelkörpers,
c) Kompaktieren des Gelkörpers **durch** Einbringen in Elektrolytlösungen, welche die Synärese des ursprünglichen gelbildenden Polyelektrolyten weiter verstärken,
d) Spülen des Gelkörpers mit Wasser und anschließendes Tränken mit einem leicht flüchtigen und wassernischbaren Lösemittel,
e) Befreien des gemäß d) erhaltenen wasserfreien Gelkörpers oder der Gelkörper von dem leicht flüchtigen wassermischbaren Lösemittel,
f) Herausbrennen der organischen Bestandteile aus dem gemäß e) erhaltenen trockenen Gelkörper oder den trockenen Gelkörpern,
g) sintern des gemäß f) erhaltenen Produktes.

4. Verfahren nach Anspruch 3 zur Herstellung einer keramischen Kapillaren-Fritte, **gekennzeichnet durch** die folgenden Stufen:
a) Vermischen der wässerigen Lösung eines geeigneten ionotrop-orientierbaren Polyanions mit entweder
- den solförmig vorliegenden Oxiden oder Hydroxiden oder Oxidhydraten der Metalle Al, Zr, Ti und Nb,
- oder mit den in Suspension vorliegenden feinkristallinen Oxiden oder Hydroxiden oder Oxidhydraten dieser Metalle,
- oder mit in Suspension vorliegendem feinkristallinem Tricalciumphosphat oder Apatit,
b) Überschichten des gemäß a) erhaltenen Mischsoles bzw. der gemäß a) erhaltenen Suspension mit der Lösung eines Salzes eines zwei- oder dreiwertigen Metallkations zur Herstellung eines ionotropen Gelkörpers und Schneiden dieses Gelkörpers in Scheiben,
c) Kompaktieren des Gelkörpers **durch** Einbringen in Elektrolytlosungen, welche die Synärese des ursprünglichen gelbildenden Polyelektrolyten weiter verstärken,
d) Spülen des Gelkörpers mit Wasser und anschließendes Tränken mit einem leicht flüchtigen und wassermischbaren Lösemittel,
e) Befreien der gemäß d) erhaltenen wasserfreien Gelscheiben von dem leicht flüchtigen wassermischbaren Lösemittel,
f) Herausbrennen der organischen Bestandteile aus den gemäß e) erhaltenen trockenen Gelscheiben,
g) Sintern des gemäß f) erhaltenen Produktes.

5. Verwendung der Keramik nach Anspruch 1 als Katalysator oder als Katalysatorträger.

6. Verwendung eines aus der Keramik nach Anspruch 1 hergestellten Keramik-Granulates als keramische Komponente für Verbundwerkstoffe.

7. Verwendung nach Anspruch 6, **dadurch gekennzeichnet, daß** der Verbundwerkstoff neben der Keramik ein Kunstharz und ggf. einen Haftvermittler umfaßt.

8. Verwendung des in Anspruch 7 definierten Verbundwerkstoffes als Dentalmaterial, insbesondere als Zahnzement.

9. Verwendung der keramischen Kapillaren-Fritte nach Anspruch 2 als Katalysator, Katalysatorträger, rückspülbares Filter und als plattenförmiges Sorbens für chromatografische Säulen.

## Claims

1. Porous ceramic which can be obtained by:
a) Mixing an aqueous solution of a suitable ionotropically orientable polyanion with either
- the oxides or hydroxides or hydrated oxides of the metals Al, Zr, Ti, and Nb, which are present in sol form,
- or with the finely crystalline oxides or hydroxides or hydrated oxides of these metals, which are present in suspension,
- or with finely crystalline tricalcium phosphate or apatite, which is present in suspension,
b) Bringing the mixed sol obtained according to a), or the suspension obtained according to a), into contact with the solution of a salt of a divalent or trivalent metal cation in order to produce an ionotropic gel body,
c) Compacting the gel body by introduction into electrolyte solutions, which further reinforce the synaresis of the original polyelectrolyte which is formed,
d) Washing the gel body with water and then impregnating with a readily volatile water-miscible solvent,
e) Removing the readily volatile water-miscible solvent from the water-free gel body obtained according to d) or the gel bodies,
f) Burning out the organic constituents from the dried gel body obtained according to e) or the dried gel bodies,
g) Sintering the product obtained according to f).

2. Porous ceramic according to Claim 1, **characterised in that** it is configured as a capillary-frit and it can be obtained by:
a) Mixing the aqueous solution of a suitable ionotropically orientable polyanion with either
- the oxides or hydroxides or hydrated oxides of the metals Al, Zr, Ti, and Nb, which are present in sol form,
- or with the finely crystalline oxides or hydroxides or hydrated oxides of these metals, which are present in suspension,
- or with finely crystalline tricalcium phosphate or apatite, which is present in suspension,
b) Covering the mixed sol obtained according to a), or the suspension obtained according to a), with a layer of the solution of a salt of a divalent or trivalent metal cation in order to produce an ionotropic gel body, and cutting this gel body into sheets,
c) Compacting the gel body by introduction into electrolyte solutions, which further reinforce the synaresis of the original polyelectrolyte which is formed,
d) Washing the gel body with water and then impregnating with a readily volatile water-miscible solvent,
e) Removing the readily volatile water-miscible solvent from the water-free gel sheets obtained according to d),
f) Burning out the organic constituents from the dried gel sheets obtained according to e),
g) Sintering the product obtained according to f).

3. Method for producing a porous ceramic, **characterised by** the following stages:
a) Mixing an aqueous solution of a suitable ionotropically orientable polyanion with either
- the oxides or hydroxides or hydrated oxides of the metals Al, Zr, Ti, and Nb, which are present in sol form,
- or with the finely crystalline oxides or hydroxides or hydrated oxides of these metals, which are present in suspension,
- or with finely crystalline tricalcium phosphate or apatite, which is present in suspension,
b) Bringing the mixed sol obtained according to a), or the suspension obtained according to a), into contact with the solution of a salt of a divalent or trivalent metal cation in order to produce an ionotropic gel body,
c) Compacting the gel body by introduction into electrolyte solutions, which further reinforce the synaresis of the original polyelectrolyte which is formed,
d) Washing the gel body with water and then impregnating with a readily volatile water-miscible solvent,
e) Removing the readily volatile water-miscible solvent from the water-free gel body obtained according to d) or the gel bodies,
f) Burning out the organic constituents from the dried gel body obtained according to e) or the dried gel bodies,
g) Sintering the product obtained according to f).

4. Method according to Claim 3 for producing a ceramic capillary-frit, **characterised by** the following stages:
a) Mixing the aqueous solution of a suitable ionotropically orientable polyanion with either
- the oxides or hydroxides or hydrated oxides of the metals Al, Zr, Ti, and Nb, which are present in sol form,
- or with the finely crystalline oxides or hydroxides or hydrated oxides of these metals, which are present in suspension,
- or with finely crystalline tricalcium phosphate or apatite, which is present in suspension,
b) Covering the mixed sol obtained according to a), or the suspension obtained according to a), with a layer of the solution of a salt of a divalent or trivalent metal cation in order to produce an ionotropic gel body, and cutting this gel body into sheets,
c) Compacting the gel body by introduction into electrolyte solutions, which further reinforce the synaresis of the original polyelectrolyte which is formed,
d) Washing the gel body with water and then impregnating with a readily volatile water-miscible solvent,
e) Removing the readily volatile water-miscible solvent from the water-free gel sheets obtained according to d),
f) Burning out the organic constituents from the dried gel sheets obtained according to e),
g) Sintering the product obtained according to f).

5. Use of the ceramic according to Claim 1 as a catalyst or as a catalyst support.

6. Use of ceramic granules produced from the ceramic according to Claim 1 as a ceramic component for composite materials.

7. Use according to Claim 6, **characterised in that**, besides the ceramic, the composite material comprises a synthetic resin and optionally an adhesion promoter.

8. Use of the composite material defined in Claim 7 as dental material, in particular as tooth cement.

9. Use of the ceramic capillary-frit according to Claim 2 as a catalyst, a catalyst support, as a backwashable filter and as a sorbent in plate form for chromatography columns.

## Revendications

1. Céramique poreuse, réalisable comme suit :
a) Mélange d'une solution aqueuse d'un polyanion orientable ionotrope avec
- soit les oxydes ou hydroxydes ou hydrates d'oxyde en forme de sol des métaux Al, Zr, Ti et Nb,
- soit les oxydes ou hydroxydes ou hydrates d'oxydes des ces métaux, en suspension sous forme de fins cristaux,
- soit de fins cristaux de phosphate tricalcique ou d'apatite en suspension ;
b) Mise en contact du sol mixte obtenu conformément à a) ou de la suspension obtenue conformément à a) avec la solution d'un sel d'un cation métallique divalent ou trivalent pour l'obtention d'un corps gélifié ionotrope ;
c) Compaction du corps gélifié par introduction dans des solutions d'électrolyte, qui renforcent encore la synérèse du polyélectrolyte générateur de gel d'origine ;
d) Rinçage du corps gélifié à l'eau, puis imprégnation avec un solvant facilement volatile et miscible à l'eau ;
e) Libération du ou des corps gélifiés exempts d'eau obtenus conformément à d) du solvant facilement volatile miscible à l'eau ;
f) Elimination par combustion des composants organiques du ou des corps gélifiés secs obtenus conformément à e) ;
g) Frittage du produit obtenu conformément à f).

2. Céramique poreuse selon la revendication 1, **caractérisée en ce qu'**elle est configurée comme fritte capillaire et qu'elle est réalisable comme suit :
a) Mélange de la solution aqueuse d'un polyanion orientable ionotrope approprié avec
- soit les oxydes, les hydroxydes ou les hydrates d'oxydes des métaux Al, Zr, Ti et Nb, présents sous forme de sols,
- soit les oxydes ou hydroxydes ou hydrates d'oxydes des ces métaux, en suspension sous forme de fins cristaux,
- soit de fins cristaux de phosphate tricalcique ou d'apatite en suspension ;
b) Superposition du sol mixte obtenu conformément à a) ou de la suspension obtenue conformément à a), avec la solution d'un sel d'un cation métallique divalent ou trivalent pour l'obtention d'un corps gélifié ionotrope et coupage de ce corps en tranches ;
c) Compaction du corps gélifié par introduction dans des solutions d'électrolyte, qui renforcent encore la synérèse du polyélectrolyte générateur de gel d'origine ;
d) Rinçage du corps gélifié à l'eau, puis imprégnation avec un solvant facilement volatile et miscible à l'eau ;
e) Libération des tranches de gel exemptes d'eau obtenues conformément à d) du solvant facilement volatile miscible à l'eau ;
f) Elimination par combustion des composants organiques des tranches de gel sèches obtenues conformément à e) ;
g) Frittage du produit obtenu conformément à f).

3. Procédé d'obtention d'une céramique poreuse, **caractérisé par** les étapes suivantes :
a) Mélange de la solution aqueuse d'un polyanion orientable ionotrope approprié avec
- soit les oxydes, les hydroxydes ou les hydrates d'oxydes des métaux Al, Zr, Ti et Nb, présents sous forme de sols,
- soit les oxydes ou hydroxydes ou hydrates d'oxydes des ces métaux, en suspension sous forme de fins cristaux,
- soit de fins cristaux de phosphate tricalcique ou d'apatite en suspension ;
b) Mise en contact du sol mixte obtenu conformément à a) ou de la suspension obtenue conformément à a) avec la solution d'un sel d'un cation métallique divalent ou trivalent pour l'obtention d'un corps gélifié ionotrope ;
c) Compaction du corps gélifié par introduction dans des solutions d'électrolyte, qui renforcent encore la synérèse du polyélectrolyte générateur de gel d'origine ;
d) Rinçage du corps gélifié à l'eau, puis imprégnation avec un solvant facilement volatile et miscible à l'eau ;
e) Libération du ou des corps gélifiés exempts d'eau obtenus conformément à d) du solvant facilement volatile miscible à l'eau ;
f) Élimination par combustion des composants organiques du ou des corps gélifiés secs obtenus conformément à e) ;
g) Frittage du produit obtenu conformément à f).

4. Procédé d'obtention d'une fritte céramique capillaire selon la revendication 3, **caractérisé par** les étapes suivantes :
a) Mélange de la solution aqueuse d'un polyanion orientable ionotrope approprié avec
- soit les oxydes, les hydroxydes ou les hydrates d'oxydes des métaux Al, Zr, Ti et Nb, présents sous forme de sols,
- soit les oxydes ou hydroxydes ou hydrates d'oxydes des ces métaux, en suspension sous forme de fins cristaux,
- soit de fins cristaux de phosphate tricalcique ou d'apatite en suspension ;
b) Superposition du sol mixte obtenu conformément à a) ou de la suspension obtenue conformément à a), avec la solution d'un sel d'un cation métallique divalent ou trivalent pour l'obtention d'un corps gélifié ionotrope et coupage de ce corps en tranches ;
c) Compaction du corps gélifié par introduction dans des solutions d'électrolyte, qui renforcent encore la synérèse du polyélectrolyte générateur de gel d'origine ;
d) Rinçage du corps gélifié à l'eau, puis imprégnation avec un solvant facilement volatile et miscible à l'eau ;
e) Libération des tranches de gel exemptes d'eau obtenues conformément à d) du solvant facilement volatile miscible à l'eau ;
f) Elimination par combustion des composants organiques des tranches de gel sèches obtenues conformément à e) ;
g) Frittage du produit obtenu conformément à f).

5. Utilisation de la céramique selon la revendication 1 comme catalyseur ou support de catalyseur.

6. Utilisation d'un granulé de céramique obtenu avec la céramique selon la revendication 1 comme composante céramique pour des matériaux composites.

7. Utilisation selon la revendication 6, **caractérisée en ce que** le matériau composite comprend, outre la céramique, une résine synthétique et, le cas échéant, un agent de pontage.

8. Utilisation du matériau composite défini à la revendication 7 comme matériau de chirurgie dentaire, en particulier comme ciment dentaire.

9. Utilisation de la fritte céramique capillaire selon la revendication 2 comme catalyseur, support de catalyseur, filtre rinçable à contre-courant et comme sorbant en plaque pour des colonnes de chromatographie.
